# EUROPÄISCHE PATENTANMELDUNG

(11) **EP 4 382 357 A1**
(43) Veröffentlichungstag der Anmeldung: **12.06.2024**
(21) Anmeldenummer: 22212390.3
(22) Anmeldetag: 09.12.2022
(51) Int. Cl.: B60N 2/56

(54) **ANORDNUNG ZUR KLIMATISIERUNG MINDESTENS EINER POLSTERFLÄCHE**

(71) Anmelder: I.G. Bauerhin GmbH, 63584 Gründau (DE)
(72) Erfinder: Bauer, Stefan, 63755 Alzenau (DE)
(74) Vertreter: Grünecker Patent- und Rechtsanwälte PartG mbB

(57) **Zusammenfassung**

Die Erfindung betrifft eine Anordnung zur Klimatisierung mindestens einer Polsterfläche, umfassend eine Polstertragestruktur, eine thermoelektrische Vorrichtung sowie einen Lüfter, wobei der Lüfter über ein einen Hohlraum bildendes Verbindungselement strömungstechnisch mit der thermoelektrischen Vorrichtung verbunden ist, wobei die thermoelektrische Vorrichtung jeweils eine Kaltseite und eine Warmseite mit einander horizontal gegenüberliegenden Wärmeaustauschflächen umfasst, die über ein Peltierelement wärmeleitend miteinander verbunden sind. In Abhängigkeit eines auf die Polsterfläche wirkenden Gewichtes ist die Luftverteilung durch die Kaltseite und die Warmseite einstellbar.

## Beschreibung

Die vorliegende Erfindung betrifft eine Anordnung zur Klimatisierung mindestens einer Polsterfläche gemäß dem Oberbegriff des Anspruchs 1.

Derartige Anordnungen werden standardmäßig zur Klimatisierung von Fahrzeugsitzen eingesetzt. Sie umfassen üblicherweise zumindest einen Lüfter zur Belüftung der jeweiligen Sitzbereiche bzw. Polsterflächen, wobei zur gezielten Temperierung der Luftströme häufig Peltierelemente zum Einsatz kommen.

Die DE 10 2004 057 640 B4 offenbart eine Luftversorgungseinrichtung für einen Fahrzeugsitz insbesondere eines Cabriolets mit zumindest einer im oberen Bereich des Fahrzeugsitzes vorgesehenen Luftaustrittsöffnung, über welche der Kopf-, Schulter- und Nackenbereich des Sitzinsassen mit einem Luftstrom beaufschlagbar ist, dessen Temperatur und Stärke über eine Steuereinheit regelbar ist. Hierbei ist zumindest ein Peltierelement mit einer Heizfläche und einer Kühlfläche vorgesehen, wobei der Luftstrom in Abhängigkeit von Parameterwerten über eine schwenkbar gelagerte Luftklappe über die Heizfläche oder die Kühlfläche des Peltierelements leitbar ist. Äußere Parameterwerte, welche über entsprechende Sensoren detektiert werden können, sind hierbei einerseits die vorherrschende Umgebungstemperatur und andererseits die jeweils vorherrschende Fahrtgeschwindigkeit mit den damit einhergehenden Luftrückströmungen. Individuell einstellbare Vorgabewerte, von welchen aus die weitere Einstellung des Luftstroms in Abhängigkeit von automatisch erfassbaren weiteren Parameterwerten erfolgen kann, sind für den Sitzinsassen bspw. eine gewünschte Mindest- oder Höchsttemperatur für den Luftstrom und eine gewünschte Mindest- oder Höchststärke des Luftstroms.

Aus der DE 11 2019 005 983 T5 ist ein System zum thermischen Konditionieren und Bewegen eines Fluids bekannt, welches eine thermoelektrische Vorrichtung zum Umwandeln von elektrischer Energie in thermische Energie umfasst. Die thermoelektrische Vorrichtung weist eine Hauptseite und eine Ablaufseite sowie eine Fluidbewegungsvorrichtung zur Erzeugung eines Fluidstroms auf. Der Fluidstrom ist in thermischer Verbindung mit der thermoelektrischen Vorrichtung, sodass die von der thermoelektrischen Vorrichtung erzeugte thermische Energie auf den oder von dem Fluidstrom übertragen wird. Weiter umfasst das System ein Durchflusssteuerventil, das konfiguriert ist, um den Fluidstrom selektiv entlang eines Hauptseiten-Fluidstrompfad und/oder eines Ablaufseiten-Fluidstrompfads zu leiten. Das Durchflusssteuerventil kann eine Lamelle oder Klappe beinhalten. Die Position der Lamelle kann den von der Fluidbewegungsvorrichtung bereitgestellten Fluidstrom zwischen dem Haupt- und dem Ablaufseiten-Strompfad proportionieren. Die Position der Lamelle kann durch einen Motor (z. B. einen Servo-, Schritt- oder anderen Motortyp) oder ein Stellglied gesteuert werden.

Zwar ist mittels der vorbeschriebenen Ausgestaltungen eine gezielte Luftführung möglich, lässt sich jedoch nur mittels speziell hierfür eingesetzter elektronischer Steuerungs- bzw. Regelungsmodule verwirklichen.

Der vorliegenden Erfindung liegt die Aufgabe zugrunde, eine Anordnung zur Klimatisierung bereitzustellen, die eine gegenüber dem bekannten Stand der Technik vereinfachte Steuerung/Regelung der Luftführung ermöglicht.

Diese Aufgabe wird durch eine Anordnung mit den Merkmalen des Anspruchs 1 gelöst. Bevorzugte Ausführungsformen der Erfindung sind in den abhängigen Ansprüchen angegeben.

Die erfindungsgemäße Anordnung zur Klimatisierung mindestens einer Polsterfläche, umfassend eine Polstertragestruktur, eine thermoelektrische Vorrichtung sowie einen Lüfter, wobei der Lüfter über ein einen Hohlraum bildendes Verbindungselement strömungstechnisch mit der thermoelektrischen Vorrichtung verbunden ist, und wobei die thermoelektrische Vorrichtung jeweils eine Kaltseite und eine Warmseite mit einander horizontal gegenüberliegenden Wärmeaustauschflächen umfasst, die über ein Peltierelement wärmeleitend miteinander verbunden sind. Die Luftverteilung ist in Abhängigkeit eines auf die Polsterfläche wirkenden Gewichtes durch die Kaltseite und die Warmseite einstellbar.

Ein wesentliches Merkmal der erfindungsgemäßen Anordnung liegt darin, dass diese als ein lastabhängig selbstregelndes System ohne zusätzliche elektronische Bauteile zur Steuerung bzw. Regelung der Luftführung auskommt. Die Luftzufuhr wird lediglich durch das auf eine Polsterfläche, wie insbesondere Sitz- oder Lehnenfläche eines Fahrzeugsitzes wirkende Gewicht (Last) eingestellt.

Besonders bevorzugt umfasst die thermoelektrische Vorrichtung ein Gehäuse, wobei die Luftverteilung durch mindestens einen sich über einen Außenumfang des Gehäuses hinaus in den durch das Verbindungselement gebildeten Hohlraum hinein erstreckenden formstabilen Luftleitkörper einstellbar ist.

Bei einer Belastung, beispielsweise durch einen auf der Polsterfläche sitzenden Fahrzeuginsassen neigt sich die thermoelektrische Vorrichtung in Abhängigkeit des Gewichts des Insassen, wodurch der Volumenfluss der der Wärmeaustauschflächen durchströmenden Luft beeinflusst wird. Insbesondere wird so ein erhöhter Luftdurchfluss durch die Wärmeaustauschflächen auf der Kaltseite der thermoelektrischen Vorrichtung erreicht.

Durch die lastabhängige Neigung der thermoelektrischen Vorrichtung und damit auch des mindestens einen Luftleitkörpers verändert sich bei Belastung der Luftdurchtritt durch die Wärmeaustauschflächen sowohl auf der Kaltseite als auch auf der Warmseite der thermoelektrischen Vorrichtung. Mit anderen Worten ist die Menge der jeweils die Wärmeaustauschflächen durchströmenden Luft abhängig von dem auf die Anordnung wirkenden Gewicht.

Der mindestens eine Luftleitkörper kann hinsichtlich seiner Ausrichtung verschiedenartig ausgebildet sein. Vorzugsweise erstreckt sich der oder jeder Luftleitkörper im unbelasteten Zustand im Wesentlichen waagerecht in den durch das Verbindungselement gebildeten Hohlraum hinein, in Strömungsrichtung gesehen. Insbesondere kann der oder jeder Luftleitkörper keilförmig ausgebildet sein, wobei die Keilspitze zweckmäßigerweise in Richtung des Lüfters zeigt. Dabei ist die Keilspitze des oder jedes Luftleitkörpers so ausgelegt, dass keine Luft-Verwirbelungen in diesem Bereich entstehen. Ein Keil ist ein Körper, bei dem zwei Seitenflächen unter einem spitzen Winkel zusammenlaufen und eine Keilspitze bilden. Damit Luft-Verwirbelungen nicht entstehen wird die Keilspitze auf zwei gegenüberliegenden Seitenflächen mit einer tangential auslaufenden Verrundung ausgestaltet.

Besonders bevorzugt erstreckt sich der mindestens eine Luftleitkörper im Wesentlichen parallel zur Erstreckungsrichtung der Wärmeaustauschflächen bzw. im Wesentlichen parallel zur Erstreckungsrichtung des Peltierelements. Mit anderen Worten erstreckt sich der Luftleitkörper im Wesentlichen parallel zur jeweiligen Polsterfläche, sowohl einer Sitzfläche als auch einer Lehnenfläche, eines Fahrzeugsitzes.

In einer vorteilhaften Ausgestaltung der Erfindung ist der mindestens eine Luftleitkörper einstückig mit dem Gehäuse ausgebildet. Der oder jeder Luftleitkörper und das Gehäuse lassen sich so in einem gemeinsamen Fertigungsschritt herstellen.

Alternativ bevorzugt ist der mindestens eine Luftleitkörper mittels eines Rahmens an dem Gehäuse der thermoelektrischen Vorrichtung befestigt. Unter einem Rahmen im Sinne der vorliegenden Erfindung wird insbesondere ein Befestigungselement verstanden, welches eine einfache Anbringung des oder jedes Luftleitkörpers an der thermoelektrischen Vorrichtung erlaubt. Die geometrischen Abmessungen des Rahmens sind hierbei zweckmäßigerweise auf die Abmessungen des Gehäuses abgestimmt. Grundsätzlich kann der Rahmen einteilig oder mehrteilig, also mit mehreren Rahmenelementen ausgebildet sein.

Eine vorteilhafte Ausgestaltung sieht vor, dass der Rahmen oder die einzelnen Rahmenelemente als Teil des Gehäuses der thermoelektrischen Vorrichtung, also einstückig mit dieser ausgebildet sind. Alternativ bevorzugt kann der Rahmen auch einstückig mit dem mindestens einen Luftleitkörper gefertigt sein und gemeinsam mit diesem an dem Gehäuse der thermoelektrischen Vorrichtung angeordnet werden. In beiden Fällen kann der Rahmen vollständig oder auch nur partiell an der Stirnseite des Gehäuses ausgebildet bzw. angeordnet sein. Als Stirnseite ist die Seite des Gehäuses der thermoelektrischen Vorrichtung zu verstehen, durch die ein von dem Lüfter erzeugter Luftstrom über das Verbindungselement durch die Wärmeaustauschflächen hinströmt.

Weiter bevorzugt ist der Rahmen als separates Bauteil ausgebildet und dient als Verbindungselement des oder jedes Luftleitkörpers mit dem Gehäuse der thermoelektrischen Vorrichtung.

Ebenfalls vorteilhaft ist es, wenn das Peltierelement den mindestens einen Luftleitkörper umfasst. Der mindestens eine Luftleitkörper ist dann vorzugsweise einstückig mit dem Peltierelement gefertigt. Mit anderen Worten ist der mindestens eine Luftleitkörper als Teil der thermoelektrischen Vorrichtung durch eine Verlängerung des Peltierelements gebildet. In einer weiter vorteilhaften Ausgestaltung ist der mindestens eine Luftleitkörper - als separates Bauteil - an dem Peltierelement angeordnet, beispielsweise durch ein Anstecken oder Kleben.

Alternativ bevorzugt ist der mindestens eine Luftleitkörper durch eine Verlängerung mindestens einer der Wärmeaustauschflächen gebildet ist. Insbesondere ist hierbei eine verlängerte Wärmeaustauschfläche auf der Kaltseite der thermoelektrischen Vorrichtung zweckmäßig.

Vorzugsweise ist das Verbindungselement gewichtsabhängig reversibel verformbar. Wird eine Polsterfläche beispielsweise durch das Gewicht eines aufsitzenden Insassen belastet, kann sich das Verbindungelement verformen (beispielsweise im Sinne einer Durchbiegung) und so der Neigung der thermoelektrischen Vorrichtung und/oder der Neigung des Lüfters folgen. Fällt die Belastung weg, nimmt das Verbindungselement wieder seine ursprüngliche Form an.

Vorzugsweise besteht das Verbindungselement im Wesentlichen aus einem Elastomer-Material, wobei insbesondere ein gummiartiges oder elastisches Material eingesetzt ist, welches eine reversible Veränderung ermöglicht. Alternativ kann das Verbindungselement dünnwandig aus einem thermoplastischen Kunststoff wie Polyethylen (PE) oder Polypropylen (PP) gefertigt sein. Ebenfalls besteht die Möglichkeit ein Verbindungselement aus einem beschichteten Vlies-Material einzusetzen.

Besonders bevorzugt ist das Verbindungselement als ein Faltenbalg ausgebildet, der besonders flexibel auf die durch Gewichtseinwirkung hervorgerufenen Lageänderungen der thermoelektrischen Vorrichtung und/oder des Lüfters reagieren kann.

Vorzugsweise ist das Verbindungselement lösbar an dem Gehäuse der thermoelektrischen Vorrichtung befestigt. Vorteilhaft sind hier insbesondere Rast- oder Klemmverbindungen.

Zweckmäßigerweise umfasst der Lüfter ein Lüftergehäuse, an welchem das Verbindungselement lösbar befestigt ist. Das Lüftergehäuse umfasst vorzugsweise zwei lösbar miteinander verbundene, einen hohlen Innenraum bildende Gehäuseteile. Der Innenraum des Lüftergehäuses dient der Aufnahme eines Impellers, der im Betrieb Luft durch eine Ansaugöffnung in den Innenraum des Lüftergehäuses saugt und die Luft über mindestens eine im Lüftergehäuse ausgebildete Ausströmöffnung über das Verbindungselement zu der thermoelektrischen Vorrichtung fördert. Die lösbare Befestigung des Verbindungselements am Lüftergehäuse wird bevorzugt durch eine Rast- oder Klemmverbindung erreicht.

In einer weiter vorteilhaften Ausgestaltung der Erfindung umfasst der Lüfter eine zusätzliche Lagerplatte, die an dem Lüftergehäuse angeordnet ist. Insbesondere ist die Lagerplatte mit einem oder beiden Gehäuseteilen verrastet und weist beispielsweise Befestigungsmittel zur Befestigung an einer Polstertragestruktur und/oder Befestigungsmittel zur Aufnahme von elektrischen Komponenten oder Kabeln auf.

Das Verbindungselement ist vorzugsweise lösbar an dem Gehäuse der thermoelektrischen Vorrichtung befestigt. Auch hier ist eine Verrastung oder eine Klemmung zweckmäßig.

In einer vorteilhaften Ausgestaltung sind die thermoelektrische Vorrichtung und/oder der Lüfter schwenkbar an der Polstertragestruktur gelagert. Zweckmäßigerweise ist hierzu an dem Gehäuse der thermoelektrischen Vorrichtung und/oder an dem Lüftergehäuse bzw. an der zusätzlichen an dieser angeordneten Lagerplatte jeweils zumindest ein Befestigungsmittel ausgebildet.

Weitere Einzelheiten und Merkmale der Erfindung ergeben sich aus der nachfolgenden Beschreibung von Ausführungsbeispielen anhand der Zeichnung. In der Zeichnung zeigt
- Fig. 1: eine erste Anordnung zur Klimatisierung eines Polstersitzes in einer Schnittdarstellung,
- Fig. 2: die Anordnung zur Klimatisierung gemäß Fig.1 in einer perspektivischen Ansicht,
- Fig. 3: eine zweite Anordnung zur Klimatisierung eines Polstersitzes in einer Schnittdarstellung,
- Fig. 4: eine dritte Anordnung zur Klimatisierung eines Polstersitzes in einer Schnittdarstellung,
- Fig. 5: eine thermoelektrische Vorrichtung mit an deren Gehäuse angeordneten Rahmenelementen in einer perspektivischen Ansicht, sowie
- Fig. 6: die thermoelektrische Vorrichtung gemäß Fig. 4 mit an den Rahmenelementen angeordneten Luftleitkörpern.

Gleiche Komponenten in den Figuren werden mit gleichen Bezugszeichen versehen.

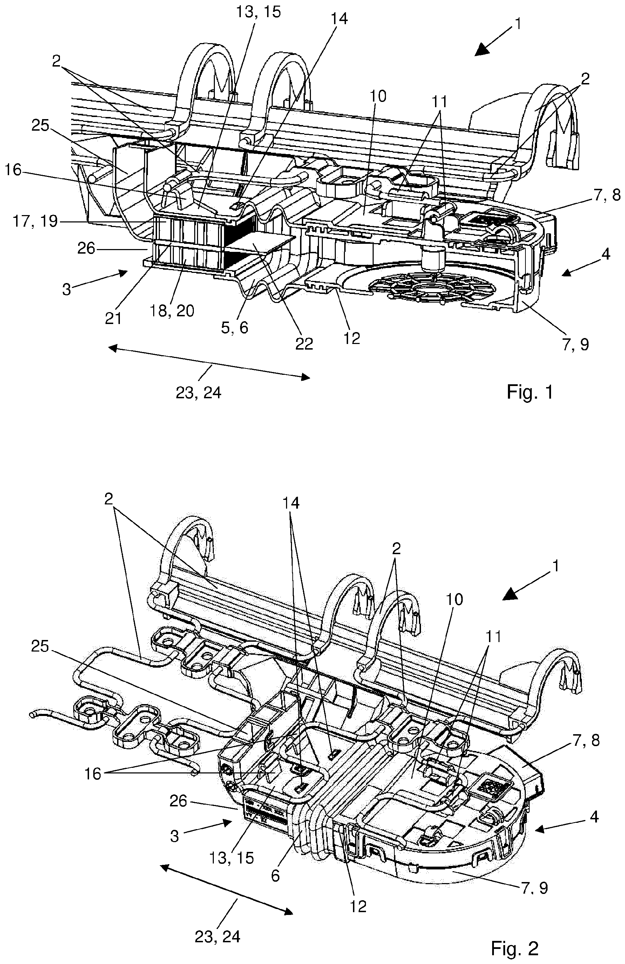

Fig. 1 zeigt eine erste Anordnung 1 zur Klimatisierung eines Polstersitzes in einer Schnittdarstellung. Die Anordnung 1 umfasst eine Polstertragestruktur 2, eine thermoelektrische Vorrichtung 3 und einen Lüfter 4. Im unbelasteten Zustand sind der Lüfter 4 und die thermoelektrische Vorrichtung 3 fluchtend angeordnet, sowohl in Lehne und/oder Sitz eines Fahrzeugsitzes Beide Bauteile 3, 4 sind über ein einen Hohlraum 5 bildendes Verbindungselement 6 strömungstechnisch miteinander verbunden.

Der Lüfter 4 weist ein Lüftergehäuse 7 aus einem Kunststoff mit einem Gehäuseoberteil 8 und einem Gehäuseunterteil 9 auf. Die Gehäuseteile 8, 9 sind miteinander verrastet. An dem Gehäuseoberteil 8 ist eine zusätzliche Lagerplatte 10 mit zwei Befestigungsmitteln 11 angeordnet. Über die Befestigungsmittel 11 ist der Lüfter 4 vorliegend nicht schwenkbar an der Polstertragestruktur 2 befestigt.

Das Verbindungselement 6 ist als ein Faltenbalg aus einem elastischen Kunststoff gefertigt. Zur Befestigung am Lüftergehäuse 7 ist das Verbindungselement 6 über den Außenumfang 12 des Lüftergehäuses 7 geschoben und an den Gehäuseteilen 8, 9 verrastet. Zusätzlich wird das Verbindungselement 6 am Gehäuseoberteil 8 von der Lagerplatte 10 übergriffen.

Die von dem Lüfter 4 angesaugte Luft strömt über das Verbindungselement 6 zur thermoelektrischen Vorrichtung 3. Die thermoelektrische Vorrichtung 3 umfasst ein Gehäuse 13 mit zumindest einer Rastnase 14, an welcher das Verbindungselement 6 verrastet ist. Weiter ist an der im eingebauten Zustand zum Polster (nicht dargestellt) gerichteten Oberseite 15 des Gehäuses 13 zumindest ein Befestigungsmittel 16 ausgebildet, mittels welchem die thermoelektrische Vorrichtung 3 schwenkbar an der Polstertragestruktur 2 gelagert ist.

Innerhalb des Gehäuses 13 der thermoelektrischen Vorrichtung 3 sind einander horizontal gegenüberliegende Wärmeaustauschflächen 17, 18 ausgebildet, die jeweils eine Kaltseite 19 und eine Warmseite 20 bilden. Die Wärmeaustauschflächen 17, 18 sind über ein Peltierelement 21 wärmeleitend miteinander verbunden.

An dem Peltierelement 21 ist ein keilförmig ausgebildeter Luftleitkörper 22 als formstabiles separates Bauteil angesteckt. Der Luftleitkörper 22 erstreckt sich im hier gezeigten unbelasteten Zustand im Wesentlichen parallel zu der Erstreckungsrichtung 23 der Wärmeaustauschflächen 17, 18 bzw. zur Erstreckungsrichtung 24 des Verbindungselementes 6 in dessen Hohlraum 5 hinein. Über den Luftleitkörper 22 ist in Abhängigkeit eines auf die Polsterfläche wirkenden Gewichtes die Luftverteilung durch die Warmseite 20 und die Kaltseite 19 einstellbar. Zusätzliche elektronische Bauteile zur Steuerung der Luftführung sind dank dieser gewichtsabhängigen Luftverteilung nicht notwendig.

In Fig. 2 ist die Anordnung 1 gemäß Fig. 1 in einer perspektivischen Ansicht gezeigt. Deutlich zu erkennen ist hier die Verrastung des als Faltenbalg ausgebildeten Verbindungselements 6 mit dem Gehäuse 13 der thermoelektrischen Vorrichtung 3. Die von dem Lüfter 4 angesaugte Luft strömt von diesem ausgehend durch den Faltenbalg und tritt nach durchströmen der Wärmeaustauschflächen 17, 18 aus den Luftaustrittsöffnungen 25, 26 auf der Kaltseite 19 und auf der Warmseite 20 aus. Die aus der Luftaustrittsöffnung 25 der Kaltseite 19 geführte Luft wird einer Polsterfläche (nicht dargestellt) eines Polstersitzes (nicht dargestellt) zugeführt und die aus der Luftaustrittsöffnung 26 der Warmseite 20 geführte Luft wird beispielsweise einem Innenraum eines nicht dargestellten Fahrzeugs zugeführt. Hierbei ist die Menge der jeweils auf der Kaltseite 19 und auf der Warmseite 20 ausströmenden Luft abhängig von dem im eingebauten Zustand auf die Anordnung 1 wirkenden Gewicht.

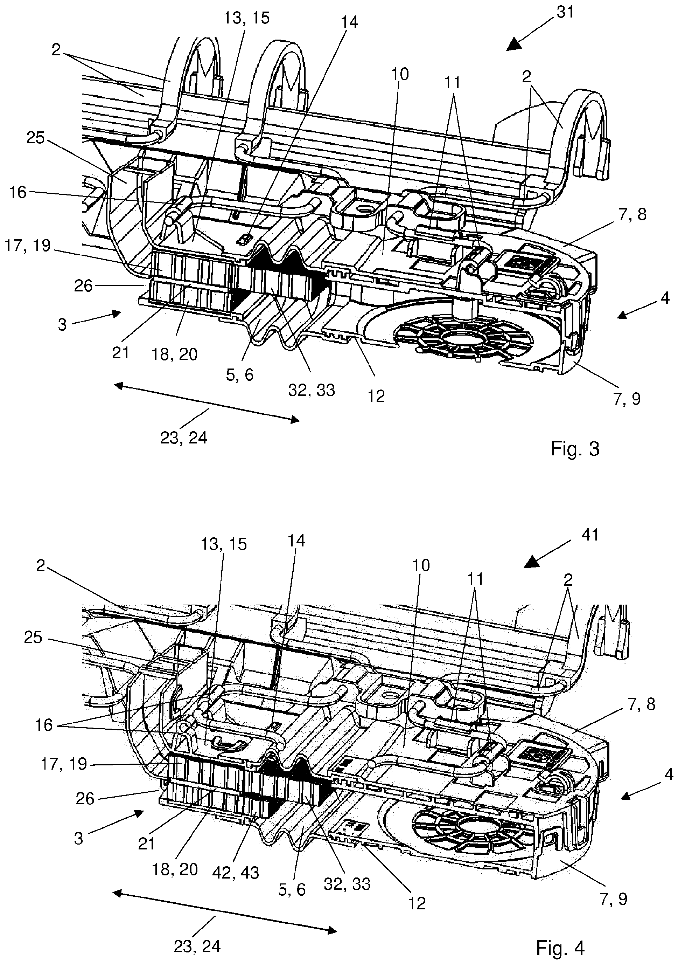

In Fig. 3 ist eine zweite Anordnung 31 zur Klimatisierung in einer Schnittdarstellung gezeigt. Diese unterscheidet sich von der Anordnung 1 gemäß Fig. 1 durch die Ausgestaltung des Luftleitkörpers 32. Dieser ist vorliegend durch die Verlängerung 33 der Wärmeaustauschfläche 17 der Kaltseite 19 der thermoelektrischen Vorrichtung 3 gebildet und erstreckt sich in den durch das Verbindungselement 6 gebildeten Hohlraum 5. Mit anderen Worten wird die Wärmeaustauschfläche 17 der Kaltseite 19 sowohl zur Luftkühlung als auch zur Einstellung der Luftverteilung genutzt.

Auch in Fig. 4 ist eine Anordnung 41 zur Klimatisierung in einer Schnittdarstellung dargestellt, in welcher zusätzlich zu der verlängerten Wärmeaustauschfläche 17 der Kaltseite 19 auch die Wärmeaustauschfläche 18 der Warmseite 20 verlängert ist. Durch die Verlängerung 42 der Wärmeaustauschfläche 18 der Warmseite 20 ist ein zusätzlicher Luftleitkörper 43 gebildet. Vorliegend erstreckt sich der durch die Verlängerung 33 der Wärmeaustauschfläche 17 der Kaltseite 19 gebildete Luftleitkörper 32 weiter in den Hohlraum 5 hinein, als die Verlängerung 42 der Wärmeaustauschfläche 18 der Warmseite 20.

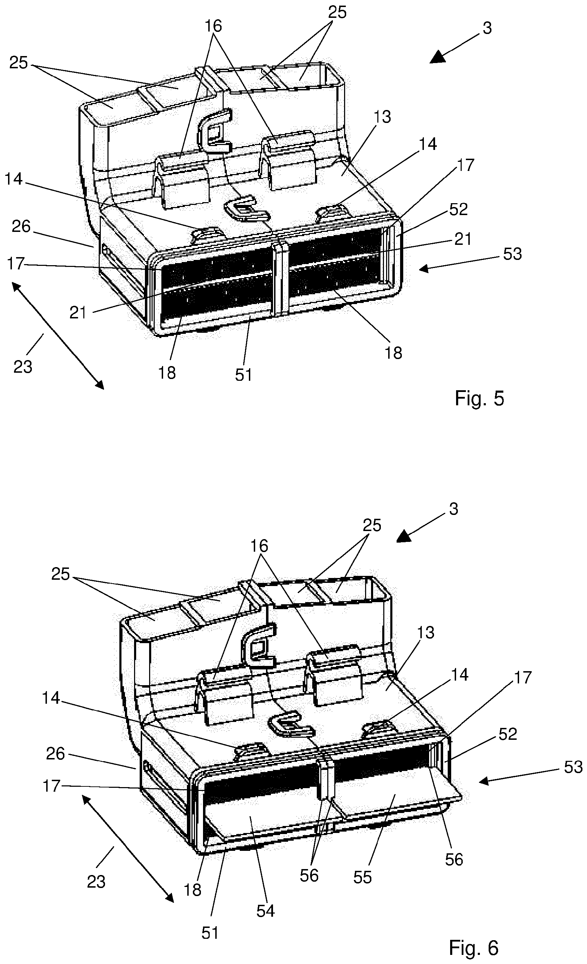

Fig. 5 zeigt die thermoelektrische Vorrichtung 3, an deren Gehäuse 13 zwei Rahmen 51, 52 angeordnet sind. Die Rahmen 51, 52 sind an der Stirnseite 53 des Gehäuses 13 an diesem verrastet und dienen der Halterung bzw. der Befestigung von Luftleitkörpern.

Diese sind in Fig. 6 zu sehen. Die Luftleitkörper 54, 55 weisen jeweils Aussparungen 56 auf, über welche die Luftleitkörper 54, 55 an den Rahmen 51, 52 positioniert sind. Zur besseren Fixierung können die Luftleitkörper 54, 55 zusätzlich an bzw. mit den Rahmen 51, 53 verklebt sein.

## Patentansprüche

1. Anordnung (1, 31, 41) zur Klimatisierung mindestens einer Polsterfläche, umfassend eine Polstertragestruktur (2), eine thermoelektrische Vorrichtung (3) sowie einen Lüfter (4), wobei der Lüfter (4) über ein einen Hohlraum (5) bildendes Verbindungselement (6) strömungstechnisch mit der thermoelektrischen Vorrichtung (3) verbunden ist, wobei die thermoelektrische Vorrichtung (3) jeweils eine Kaltseite (19) und eine Warmseite (20) mit einander horizontal gegenüberliegenden Wärmeaustauschflächen (17, 18) umfasst, die über ein Peltierelement (21) wärmeleitend miteinander verbunden sind,
**dadurch gekennzeichnet, dass**
in Abhängigkeit eines auf die Polsterfläche wirkenden Gewichtes die Luftverteilung durch die Kaltseite (19) und die Warmseite (20) einstellbar ist.

2. Anordnung (1, 31, 41) nach Anspruch 1, **dadurch gekennzeichnet, dass** die thermoelektrische Vorrichtung (3) ein Gehäuse (13) umfasst, wobei die Luftverteilung durch mindestens einen sich über einen Außenumfang (12) des Gehäuses (13) hinaus in den durch das Verbindungselement (6) gebildeten Hohlraum (5) hinein erstreckenden formstabilen Luftleitkörper (22, 32, 43, 54, 55) einstellbar ist.

3. Anordnung (1, 31, 41) nach Anspruch 2, **dadurch gekennzeichnet, dass** sich der mindestens eine Luftleitkörper (22, 32, 43, 54, 55) im Wesentlichen waagerecht in den durch das Verbindungselement (6) gebildeten Hohlraum (5) hinein erstreckt.

4. Anordnung (1, 31, 41) nach Anspruch 2 oder 3, **dadurch gekennzeichnet, dass** der mindestens eine Luftleitkörper (22, 32, 43, 54, 55) einstückig mit dem Gehäuse (13) ausgebildet ist.

5. Anordnung (1, 31, 41) nach Anspruch 2 oder 3, **dadurch gekennzeichnet, dass** der mindestens eine Luftleitkörper (22, 32, 43, 54, 55) mittels eines Rahmens (51, 52) an dem Gehäuse (13) befestigt ist.

6. Anordnung (1, 31, 41) nach Anspruch 2 oder 3, **dadurch gekennzeichnet, dass** das Peltierelement (21) den mindestens einen Luftleitkörper (22, 32, 43, 54, 55) umfasst.

7. Anordnung (1, 31, 41) nach einem der Ansprüche 2 oder 3 und 5, **dadurch gekennzeichnet, dass** der mindestens eine Luftleitkörper (22, 32, 43, 54, 55) an dem Peltierelement (21) angeordnet ist.

8. Anordnung (1, 31, 41) nach einem der Ansprüche 2 oder 3 und 5 oder 7, **dadurch gekennzeichnet, dass** der mindestens eine Luftleitkörper (22, 32, 43, 54, 55) durch eine Verlängerung (33, 42) mindestens einer der Wärmeaustauschflächen (17, 18) gebildet ist.

9. Anordnung (1, 31, 41) nach einem der vorhergehenden Ansprüche, **dadurch gekennzeichnet, dass** das Verbindungselement (6) gewichtsabhängig reversibel verformbar ist.

10. Anordnung (1, 31, 41) nach einem der vorhergehenden Ansprüche, **dadurch gekennzeichnet, dass** das Verbindungselement (6) im Wesentlichen aus einem Elastomer-Material besteht.

11. Anordnung (1, 31, 41) nach einem der vorhergehenden Ansprüche, **dadurch gekennzeichnet, dass** das das Verbindungselement (6) als ein Faltenbalg ausgebildet ist.

12. Anordnung (1, 31, 41) nach einem der vorhergehenden Ansprüche, **dadurch gekennzeichnet, dass** das Verbindungselement (6) lösbar an dem Gehäuse (13) der thermoelektrischen Vorrichtung (3) befestigt ist.

13. Anordnung (1, 31, 41) nach einem der vorhergehenden Ansprüche, **dadurch gekennzeichnet, dass** der Lüfter (4) ein Lüftergehäuse (7) umfasst, an welchem das Verbindungselement (6) lösbar befestigt ist.

14. Anordnung (1, 31, 41) nach einem der vorhergehenden Ansprüche, **dadurch gekennzeichnet, dass** die thermoelektrische Vorrichtung (3) und/oder der Lüfter (4) schwenkbar an der Polstertragestruktur (2) gelagert sind.
